Europäisches Patentamt

European Patent Office

Office européen des brevets

(11) Publication number: **0 422 921 A1**

## EUROPEAN PATENT APPLICATION

(21) Application number: **90311109.4**

(22) Date of filing: **10.10.90**

(51) Int. Cl.⁵: **B60S 1/38**

(30) Priority: **11.10.89 GB 8922906**

(43) Date of publication of application:
**17.04.91 Bulletin 91/16**

(84) Designated Contracting States:
**BE DE ES FR IT**

(71) Applicant: **TRICO-FOLBERTH LIMITED**
**Great West Road**
Brentford Middlesex TW8 9HP(GB)

(72) Inventor: **Mower, Peter**
**9, Blandford Avenue, Whitton**
**Twickenham, Middlesex(GB)**

(74) Representative: **Pedder, James Cuthbert**
**J.C. Pedder & Co. 38 Norbury Cross**
**Norbury London SW16 4JQ(GB)**

(54) Vertebra for a windscreen wiper blade rubber and a windscreen wiper blade incorporating such a vertebra.

(57) A vertebra for a windscreen wiper blade rubber comprises a pair of flat strips (1 and 3) for location in longitudinal grooves (29) in the longitudinal sides of the blade rubber (17). Each strip (1, 3) is provided with an open captivating slot (7) facing sideways of the strip (1, 3) and extending outside the line of the strip (1, 3) at a position to captivate a claw (25) on the blade harness when the strip (1, 3) is located in the blade rubber (17). At least one strip (1, 3) is long enough to extend beyond the end of the blade rubber (17). The vertebra has bent portions (15, 16) of the strip or strips (1,3) bent or formed round at opposite ends (9, 10) of the vertebra in a direction away from the side of the strip (1, 3) containing the claw captivating slot (7) so as, in use, to pass around opposite ends of the blade rubber (17).

The invention also includes a windscreen wiper blade incorporating such a vertebra.

FIG.2

This invention relates to a vertebra for a windscreen wiper blade rubber and to a windscreen wiper blade incorporating such a vertebra.

Modern windscreen wiper blades are usually formed with a harness comprising a plurality of yokes, the ends of which, adjacent to the blade rubber, are provided with claws which hold the blade rubber in place while allowing relative longitudinal movement between the rubber and the claws or all but one of the claws so that the blade, together with the rubber can flex to follow the curve of the windscreen to which it is to be applied.

The "rubber" is usually made from rubber, either natural or synthetic and, due to the characteristics of the material, it is not sufficiently rigid in a transverse direction to maintain a proper wipe characteristic. Thus, rigidity is imparted into the rubber by means of a stiffening member(s) or vertebra(e) which extends longitudinally for the length of the rubber.

One type of vertebra which is known is the so called "twin rail" vertebra. This consists of a pair of flat metal or other strips which seat in longitudinal grooves in the blade rubber. The problem then remains of maintaining the vertebra in the blade rubber and also of preventing the blade rubber from sliding out of the claws of the blade harness. In the past, moulded rubbers were used and the requisite location was provide by appropriate moulding of the rubbers. Thus, for example, the slots carrying the vertebra were closed at both ends so as to prevent the vertebra from sliding out longitudinally. The assembly of rubber and vertebra was then retained in the harness by the provision of a pocket in the rubber in to which one of the claws of the harness penetrates and is held thereby.

While this has proved to be satisfactory in practice, with the development of technology to reduce production costs, there has been a tendency to change from the relatively expensive moulded rubbers to extruded rubbers. With extruded rubbers, it is not, of course, possible to provide closed end slots so that other means of securing the vertebra in the blade rubber has been found to be necessary. Various proposals have been made for this purpose. For example, it is possible to place an end clip on one or both ends of the rubber and to secure this by providing it with slots by means of which it can be held by the harness claw. However, this solution requires one or two additional parts per blade and thus goes a long way towards taking up the cost saving made by the use of an extruded rubber.

The present invention seeks to provide a vertebra for a blade rubber and a construction of windscreen wiper blade in which some or all of the above disadvantages are reduced or substantially obviated.

According to a first aspect of the invention, a vertebra for a windscreen wiper blade rubber comprises a pair of flat strips for location in longitudinal grooves in the longitudinal sides of the blade rubber, each strip being provided with an open captivating slot facing sideways of the strip and extending outside the line of the strip at a position to captivate a claw on the blade harness when the strip is located in the blade rubber, at least one strip being long enough to extend beyond the end of the blade rubber and the vertebra having bent portions of the strip or strips bent or formed round at opposite ends of the vertebra in a direction away from the side of the strip containing the claw captivating slot so as, in use, to pass around opposite ends of the blade rubber.

According to a second aspect of the invention, a windscreen wiper blade comprises a harness including a main yoke or lever, pivotal means for attaching the main yoke or lever to a windscreen wiper arm, at least one secondary yoke or lever pivot ally connected in the middle region thereof to one end of the main yoke or lever, the free ends of the yokes or levers being provided with claws, a blade rubber carried by the claws of the yokes or levers and a vertebra in the form of two flat strips located in longitudinal grooves in the blade rubber, wherein each strip is provided with an open slot facing sideways of the strip and extending outside the line of the strip at a position to captivate a claw of the yokes or levers, at least one strip being longer than the blade rubber and the vertebra having bent portions of the strip or strips bent or formed round at opposite ends of the vertebra in a direction away from the side of the strip containing the claw captivating slot so as, in use, to pass around opposite ends of the blade rubber.

If desired, both of the bent portions may be provided on opposite ends of a single one of the strips. Alternatively, one of the bent portions may be provided on each of the strips, the bent portions on one strip being at the opposite end of the vertebra to the bent portion on the other strip.

Since the strips of the vertebrae are retained in position by engagement of the open slots with the claw or claws of the harness, the bent or formed ends of the vertebrae will retain the blade rubber between them and thus retain it in the harness.

The open slots may be formed in the vertebra strips towards the same ends thereof in which case they will be engaged by different claws, usually claws at opposite ends of the harness. Alternatively, the open slots may be formed towards opposite ends of the strips so that the slots in both strips are engaged by the same harness claw.

Preferably the bent or formed end is twisted or flattened out so as to present a flat surface to the end of the blade rubber.

The invention will now be described in greater detail, by way of example, with reference to the drawings, in which:-

Figure 1 is a plan view of a pair of strips forming a vertebra in accordance with a first embodiment of the invention, the blade rubber being shown partially in section;

Figure 2 is a fragmentary perspective view of one end of a windscreen wiper blade incorporating the vertebra of figure 1 and also showing the formation of the vertebra at the other end, and

Figures 3 and 4 are views similar to figure 1 but showing a second and a third embodiment of the vertebra.

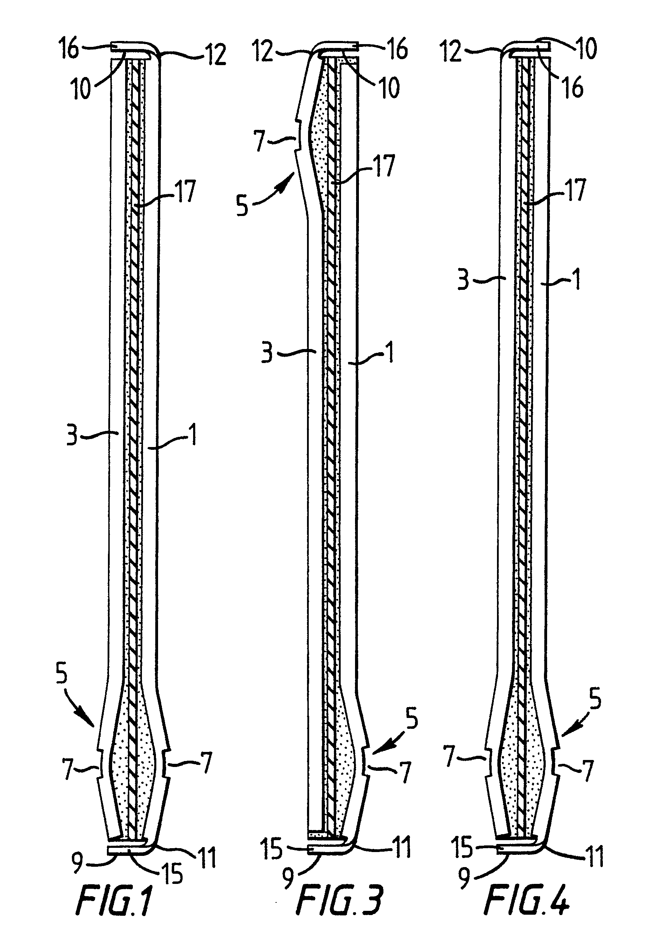

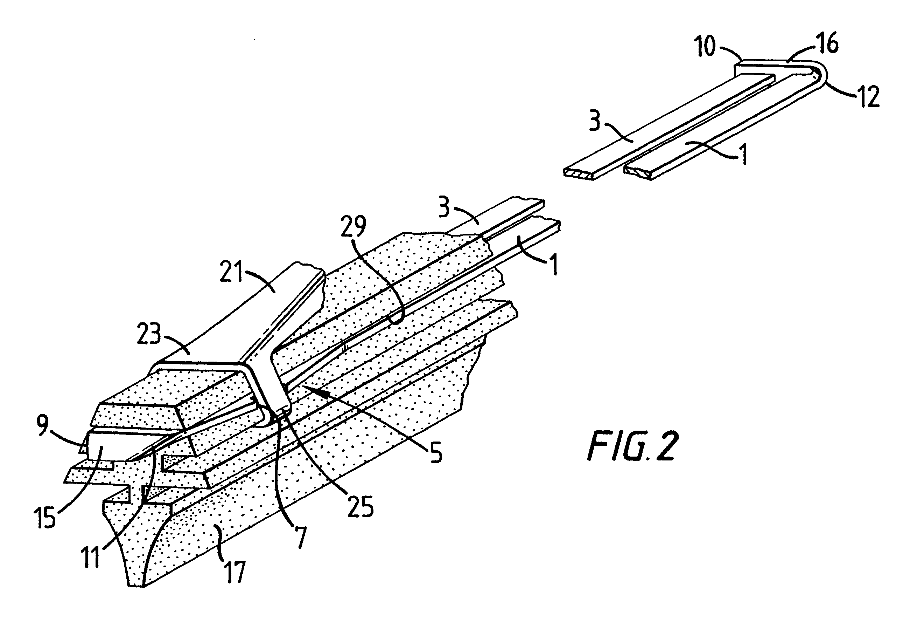

Referring firstly to figure 1, there is shown a vertebra comprising a pair of flat strips 1 and 3, suitably produced from flattened wire. The major part of each strip 1 and 3 are identical, the two strips being bowed apart at 5 and having outwardly facing slots 7 therein for the purpose of captivating a claw of a blade harness as will be described in relation to figure 2. The strip 1 is longer than both the strip 3 and the blade rubber 17 and has its opposite outer ends 9 and 10 bent or formed round at 11 and 12 to provide a portion 15 or 16 extending substantially at right angles to the rest of the strip 1. These portions 15 and 16 are intended to pass around the ends of the blade rubber 17 so as to retain it in place without preventing some longitudinal movement thereof. As can be particularly seen in figure 2, not only are the ends 9 and 10 of the strip 1 bent or formed at right angles to the remainder of the strip but they are also twisted as shown at 19 so as to present a flat surface to the blade rubber 17.

Figure 2 shows the vertebra in use. In this figure is shown a fragment of a blade harness comprising a subsidiary yoke or lever 21 whose free end 23 terminates in a claw 25. The blade rubber carried by the blade harness is shown at 17. As can be seen, the two strips 1 and 3 are located in longitudinal grooves 29 in the blade rubber 17. They are retained in the harness by the fact that the claw 25 of the subsidiary yoke or lever 21 is captivated in the slots 7. The strip 1 is retained in the rubber 17 by the portions 15 and 16 extending around the ends of the blade rubber 17, one end of which is shown at 31. A similar situation take's place with the other end (not shown) of the blade rubber. Thus the blade rubber is held securely between the two portions 15 and 16 which allow a certain amount of play. The second strip 3 is retained in position by virtue of the fact that it is captivated by the claw 25.

Thus the movement of the strips 1 and 3 is prevented both transversely and longitudinally with respect to the harness by being captivated by the claw 25 and the strip 1 is retained in position in the rubber 17 by the portions 15 and 16 thereof. The remaining claws (not shown) of the harness are not captivated, allowing, together with the play permitted by the portions 15 and 16, the blade rubber sufficient longitudinal play to be able to follow the curve of a windscreen to which it is applied.

Figure 3 shows a variation of the vertebra shown in figure 1 in that both strips are identical and the portion 16 is, in this case, formed on the end of the strip 3. It will be seen that the slots 7 on the two strips 1 and 3 are located towards opposite ends of the blade rubber and will therefore be captivated by different claws of the blade harness.

Figure 4 shows a version of the vertebra in which, while the portions 15 and 16 are provided on the strips 1 and 3 respectively, the strips are not identical. In this arrangement, the strips are arranged with the slots 7 in the same transverse location so that both strips 1 and 3 are captivated by the same claw of the blade .harness. Thus the portion 15 is provided at the captivation end of the strip 1 while the portion 16 is provided on the other end of the strip 3.

It will be appreciated that various modifications may be made to the above described embodiments without departing from the scope of the invention. For example, if desired, bent or formed portions could be provided on both ends of both strips, the length of the portions being reduced to half so that they extend only half way across the end of the blade rubber. While the twisting of the portions 15 and 16 to present a flat surface to the end of the blade rubber is preferred, the twisting could be omitted in the interests of economy.

From the foregoing, it will be seen that the invention provides a vertebra which, in its described embodiments enables an extruded blade rubber to be secured to a blade harness without the use of additional parts or the need to close in the claws after assembly.

## Claims

1. A vertebra for a windscreen wiper blade rubber comprising a pair of flat strips (1, 3) for location in longitudinal grooves (29) in the longitudinal sides of the blade rubber (17), characterised in that each strip (1, 3) is provided with an open captivating slot (7) facing sideways of the strip (1, 3) and extending outside the line of the strip (1, 3) at a position to captivate a claw (25) on the blade harness when the strip (1, 3) is located in the blade rubber (17), at least one strip (1, 3) being long enough to extend beyond the end of the blade rubber (17) and the vertebra having bent portions (15, 16) of the strip or strips (1, 3) bent or formed round at opposite ends of the vertebra in a direction away from the side of the strip (1, 3) containing the claw captivating slot (7) so as, in use, to pass around opposite ends of the blade rubber (17).

2. A windscreen wiper blade comprising a harness including a main yoke or lever, pivotal means for attaching the main yoke or lever to a windscreen wiper arm, at least one secondary yoke or lever (21) pivotally connected in the middle region thereof to one end of the main yoke or lever, the free ends of the yokes or levers being provided with claws (25), a blade rubber (17) carried by the claws (25) of the yokes or levers (21) and a vertebra in the form of two flat strips (1, 3) located in longitudinal grooves (29) in the blade rubber (17), characterised in that each strip (1, 3) is provided with an open slot (7) facing sideways of the strip (1, 3) and extending outside the line of the strip (1, 3) at a position to captivate a claw (25) of the yokes or levers (21), at least one strip (1, 3) being longer than the blade rubber (17) and the vertebra having bent portions (15, 16) of the strip or strips (1, 3) bent or formed round at opposite ends of the vertebra in a direction away from the side of the strip (1, 3) containing the claw captivating slot (7) so as, in use, to pass around opposite ends of the blade rubber (17).

3. A windscreen wiper blade as claimed in claim 2, characterised in that both of the bent portions (15, 16) are provided on opposite ends of a single one (i) of the strips (1, 3).

4. A windscreen wiper blade as claimed in claim 2, characterised in that one of the bent portions (15, 16) is provided on eac of the strips (1, 3), the bent portion (15) on one strip (1) being at the opposite end of the vertebra to the bent portion (16) on the other strip (3).

5. A windscreen wiper blade as claimed in claim 2, 3 or 4, characterised in that the open slots (7) are formed in the vertebra strips (1, 3) towards the same ends thereof so that they are engaged by different claws (25).

6. A windscreen wiper blade as claimed in claim 5, characterised in that the claws (25) engaged with the open slots (7) are located at opposite ends of the harness.

7. A windscreen wiper blade as claimed in claim 2, 3 or 4, characterised in that the open slots (7) are formed towards opposite ends of the strips (1, 3) so that the slots (7) in both strips (1, 3) are engaged by the same harness claw (25).

8. A windscreen wiper blade as claimed in any one of claims 2 to 7, characterised in that the bent or formed end (15, 16) is twisted or flattened out so as to present a flat surface to the end of the blade rubber (17).

FIG.1

FIG.3

FIG.4

FIG.2

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| X,A | US-A-3 702 490 (QUINLAN ET. AL.)<br>* column 3, lines 33 - 53 * * column 4, line 42 - column 5, line 18 @ column 5, line 52 - column 6, line 27 @ column 6, lines 58 - 64 * * column 7, lines 11 - 20 * * column 9, line 3 - column 10, line 67; figures 1, 4, 13-15, 20 @ figures 36-44 EP 90311109030 *<br>— — — — — | 1,2,7,8,3, 4 | B 60 S 1/38 |

|  |
|---|
| TECHNICAL FIELDS SEARCHED (Int. Cl.5) |
| B 60 S |

The present search report has been drawn up for all claims

| Place of search | Date of completion of search | Examiner |
|---|---|---|
| The Hague | 29 January 91 | VERLEYE J. |